# EUROPEAN PATENT APPLICATION

(11) **EP 2 672 597 A1**
(43) Date of publication of application: **11.12.2013**
(21) Application number: 13170577.4
(22) Date of filing: 05.06.2013
(51) Int. Cl.: H02H 7/125, H02H 9/04

(54) **Voltage rectifier**

(30) Priority: 08.06.2012 CN 201210187281
(71) Applicant: Hong Fu Jin Precision Industry (ShenZhen) Co., Ltd., Longhua Town, Bao'an District Shenzhen City Guangdong 518109 (CN); Hon Hai Precision Industry Co., Ltd., New Taipei City (TW)
(72) Inventor: Ren, YONG-XIN, Shenzhen (CN)
(74) Representative: Gray, John James

(57) **Abstract**

A voltage rectifier (100) rectifies an alternating current voltage to a direct current voltage. The voltage rectifier (100) includes an input port (10) for receiving the alternating current voltage; an output port (16) for outputting the direct current voltage; a lightning protection unit (11); a rectifying unit (14); a filtering unit (15); a first fuse (F1); and a second fuse (F2). The input port (10), the lightning protection unit (11), the rectifying unit (14), the filtering unit (15), the output port (16) are connected in series. The first fuse (F1) is connected between the input port (10) and the lightning protection unit (11); the second fuse (F2) is connected between the lightning protection unit (11) and the rectifying unit (14) or the second fuse (F2) is connected between the rectifying unit (14) and the filtering unit (15).

## Description

### Description of Related Art

AC/DC voltage rectifiers are widely used in electronic devices. Most AC/DC voltage rectifiers need to undergo a lightning test. A typical AC/DC voltage rectifier includes a voltage conversion circuit, a first input terminal, a second input terminal, a fuse, and a lightning protection element, for example a voltage dependent resistor; the fuse is connected between the first input terminal and the voltage conversion circuit, the second input terminal is connected to the voltage conversion circuit, a first terminal of the voltage dependent resistor is connected between the fuse and the voltage conversion circuit, a second terminal of the voltage dependent resistor is connected to the second input terminal.

When the lightning test is performed, a surge voltage of 10KV is applied between the first input terminal and the second input terminal, causing the resistance of the voltage dependent resistor to suddenly decrease, and a surge current is generated and flows through the voltage dependent resistor, therefore protecting the voltage conversion circuit from being damaged. The surge current also flows through the fuse, in order to prevent the fuse from being opened, the rated current of the fuse must be larger than the surge current.

The AC/DC voltage rectifier also includes an electrolytic capacitor for filtering the DC voltage. However, after the life of the electrolytic capacitor expires, the electrolytic capacitor may be short circuited to generate a large current; because the rated current of the fuse is very large, the fuse can not be blown open by the large current, the large current may damage the AC/DC voltage rectifier.

Therefore, there is room for improvement in the art.

### Summary

According to an exemplary embodiment of the invention, a voltage rectifier rectifies an alternating current voltage to a direct current voltage. The voltage rectifier includes an input port, an output port, a lightning protection unit, a rectifying unit, a filtering unit, a first fuse, and a second fuse. The input port receives the alternating current voltage, and the output port outputs the direct current voltage. The input port, the lightning protection unit, the rectifying unit, the filtering unit, the output port are connected in series. The first fuse is connected between the input port and the lightning protection unit; the second fuse is connected between the lightning protection unit and the rectifying unit or the second fuse is connected between the rectifying unit and the filtering unit. Because the rated current of the second fuse is smaller than the rated current of the first fuse, the second fuse is blown open by the large current, the large current cannot damage the voltage rectifier.

### BRIEF DESCRIPTION OF THE DRAWINGS

Many aspects of the embodiments can be better understood with reference to the drawing. The components in the drawing are not necessarily drawn to scale, the emphasis instead being placed upon clearly illustrating the principles of the present embodiments. Moreover, in the drawings, like reference numerals designate corresponding parts throughout five views.

FIG. 1 is a schematic block diagram showing a voltage rectifier in accordance with a first embodiment.

FIG. 2 is a schematic block diagram showing a voltage rectifier in accordance with a second embodiment.

FIG. 3 is a schematic block diagram showing a voltage rectifier in accordance with a third embodiment.

FIG. 4 is a schematic block diagram showing a voltage rectifier in accordance with a fourth embodiment.

FIG. 5 is a schematic block diagram showing a voltage rectifier in accordance with a fifth embodiment.

### DETAILED DESCRIPTION

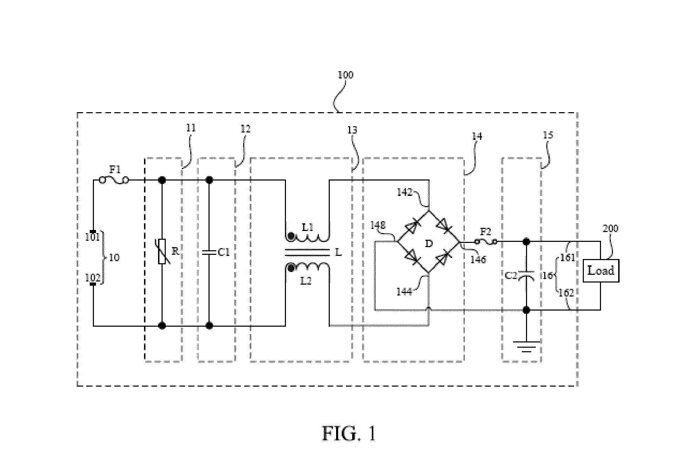

Referring to the FIG. 1, a voltage rectifier 100 in accordance with one embodiment is illustrated. The voltage rectifier 100 rectifies an alternating current (AC) voltage to a direct current (DC) voltage, and the DC voltage powers a load 200.

The voltage rectifier 100 includes an input port 10, a first fuse F1, a lightning protection unit 11, a first electro magnetic interference (EMI) shielding unit 12, a second EMI shielding unit 13, a rectifying unit 14, a second fuse F2, a filtering unit 15, and an output port 16. The input port 10 receives the AC voltage, the output port 16 outputs the DC voltage for powering the load 200. The rated current of the first fuse F1 is larger than the rated current of the second fuse F2.

The input port 10, the first fuse F1, the lightning protection unit 11, the first EMI shielding unit 12, the second EMI shielding unit 13, the rectifying unit 14, the second fuse F2, the filtering unit 15, and the output port 16 are connected in series.

The input port 10 includes a first input terminal 101 and a second input terminal 102. The first input terminal 101 and a second input terminal 102 receive the AC voltage, for example, 220 volts AC.

The first fuse F1 is connected between the first input terminal 101 and the lightning protection unit 11.

The lightning protection unit 11 is connected between the first fuse F1 and the first EMI shielding unit 12. Generally, the voltage rectifier 100 needs to undergo a lightning test, in the lightning test, a surge voltage of 10KV is applied between the first input terminal 101 and the second input terminal 102, the lightning protection unit 11 protects the voltage rectifier 100 from being damaged by the surge voltage of 10KV. In the embodiment, the lightning protection unit 11 is a voltage dependent resistor R, a first terminal of the voltage dependent resistor R is connected to the first input terminal 101 through the first fuse F1, a second terminal of the voltage dependent resistor R is connected to the second input terminal 102.

When the surge voltage of 10KV is applied between the first input terminal 101 and the second input terminal 102, the resistance of the voltage dependent resistor R is suddenly decreased, a surge current is generated and flows through the voltage dependent resistor R, therefore the voltage rectifier 100 is protected from being damaged by the surge current of 10KV. The surge current also flows through the first fuse F1, in order to ensure that the first fuse F1 cannot be blown open by the surge current, the rated current of the first fuse F1 must be larger than the surge current. In other embodiments, the lightning protection unit 11 is a transient voltage suppression (TVS) diode rather than the voltage dependent resistor, a cathode of the TVS diode is connected to the first input terminal 101 through the first fuse F1, an anode of the TVS diode is connected to the second input terminal 102.

The first EMI shielding unit 12 is connected between the lightning protection unit 11 and the second EMI shielding unit 13, the first EMI shielding unit 12 provides EMI shielding for the voltage rectifier 100. In the embodiment, the first EMI shielding unit 12 includes a capacitor C1, a first terminal of the capacitor C1 is connected to the first terminal of the voltage dependent resistor R, a second terminal of the capacitor C1 is connected to the second terminal of the voltage dependent resistor R.

The second EMI shielding unit 13 is connected between the first EMI shielding unit 12 and the rectifying unit. The second EMI shielding unit 13 also provides EMI shielding for the voltage rectifier 100. In the embodiment, the second EMI shielding unit 12 includes a common-mode inductor L, the common-mode inductor L has a first winding L1 and a second winding L2 on the common core. A first terminal of the first winding L1 is connected to the first input terminal 101 through the first fuse F1, a second terminal of the first winding L1 is connected to the rectifying unit 14. A first terminal of the second winding L2 is connected to the second input terminal 102, a second terminal of the second winding L2 is connected to the rectifying unit 14.

The rectifying unit 14 is connected between the second EMI shielding unit 13 and the second fuse F2. The rectifying unit 14 includes a full-bridge rectifier D. The full-bridge rectifier D includes a first terminal 142, a second terminal 144, a third terminal 146, and a fourth terminal 148. The first terminal 142 is connected to the second terminal of the first winding L1. The second terminal 144 is connected to the second terminal of the second winding L2. The third terminal 146 is connected to the filtering unit 15 through the second fuse F2. The fourth terminal 148 is grounded.

The filtering unit 15 includes an electrolytic capacitor C2. The output port 16 includes a first output terminal 161 and a second output terminal 162. A positive terminal of the electrolytic capacitor C2 is connected to the first output terminal 161, and a negative terminal of the electrolytic capacitor C2 is connected to the second output terminal 162 and the fourth terminal 148 of the full-bridge rectifier D. The load 200 is connected to the first output terminal 161 and the second output terminal 162.

In detail, the second fuse F2 is connected between the third terminal 146 of the full-bridge rectifier D and the positive terminal of the electrolytic capacitor C2. After the lifespan of the electrolytic capacitor C2 expires, the electrolytic capacitor C2 may be short circuited to generate a large current; because the rated current of the second fuse F2 is smaller than the rated current of the first fuse F1, the second fuse F2 is blown open by the large current, the large current cannot damage the AC/DC voltage rectifier 100.

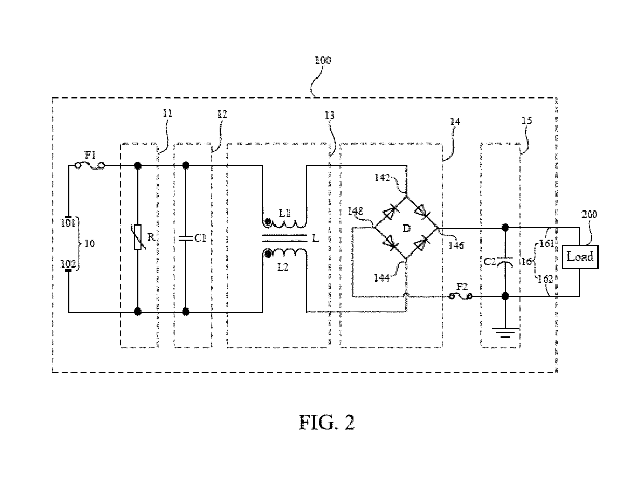

Referring to FIG. 2, as a first alternative embodiment, the second fuse F2 is connected between the fourth terminal 148 of the full-bridge rectifier D and ground.

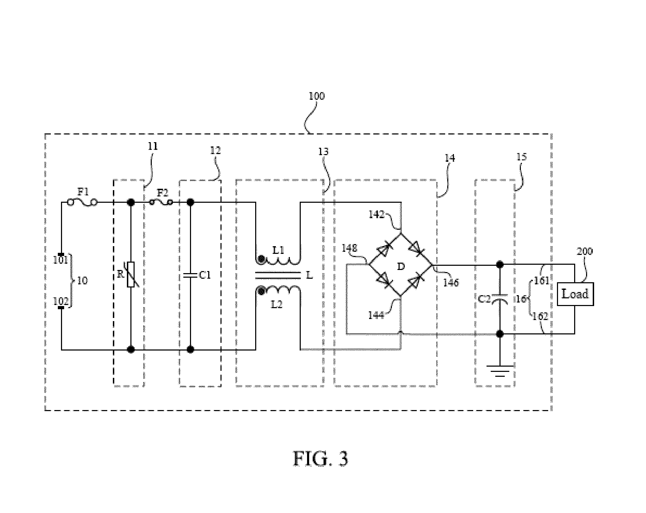

Referring to FIG. 3, as a second alternative embodiment, the second fuse F2 is connected between the lightning protection unit 11 and the first EMI shielding unit 12. In detail, a first terminal of the second fuse F2 is connected to a first terminal of the voltage dependent resistor R and the first fuse F1, a second terminal of the second fuse F2 is connected to the first terminal of the capacitor C1.

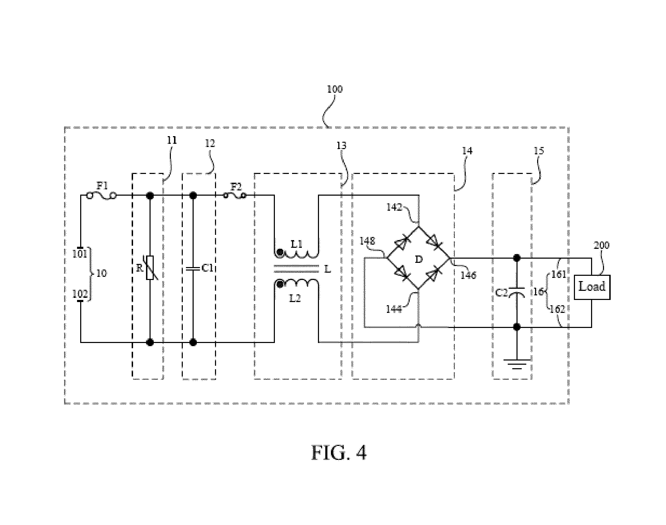

Referring to FIG. 4, as a third alternative embodiment, the second fuse F2 is connected between the first EMI shielding unit 12 and the second EMI shielding unit 13. In detail, a first terminal of the second fuse F2 is connected to a first terminal of the capacitor C1, a second terminal of the second fuse F2 is connected to the first terminal of the first winding L1 of the common-mode inductor L.

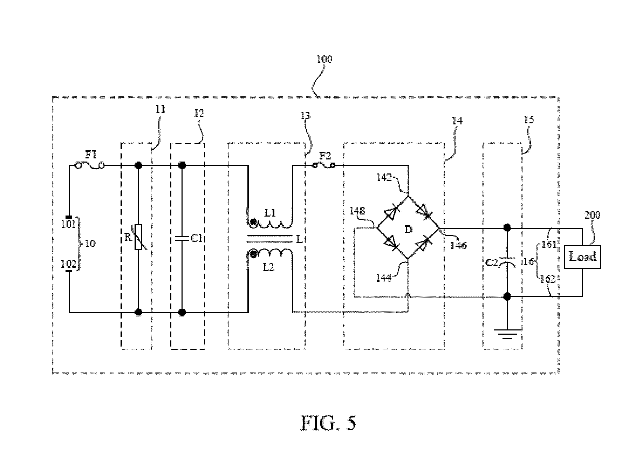

Referring to FIG. 5, as a fourth alternative embodiment, the second fuse F2 is connected between the second EMI shielding unit 13 and the rectifying unit 14. In detail, a first terminal of the second fuse F2 is connected to a second terminal of the first winding L1 of the common-mode inductor L, a second terminal of the second fuse F2 is connected to a first terminal 142 of the full-bridge rectifier D.

Further alternative embodiments will become apparent to those skilled in the art without departing from the spirit and scope of what is claimed. Accordingly, the present invention should be deemed not to be limited to the above detailed description, but rather only by the claims that follow and equivalents thereof.

## Claims

1. A voltage rectifier for rectifying an alternating current voltage to a direct current voltage, the voltage rectifier comprising:
an input port for receiving the alternating current voltage;
an output port for outputting the direct current voltage;
a lightning protection unit;
a rectifying unit;
a filtering unit;
a first fuse; and
a second fuse;
wherein the input port, the lightning protection unit, the rectifying unit, the filtering unit, the output port are connected in series; the first fuse is connected between the input port and the lightning protection unit; the second fuse is connected between the lightning protection unit and the rectifying unit or the second fuse is connected between the rectifying unit and the filtering unit, a rated current of the first fuse is larger than the rated current of the second fuse.

2. The voltage rectifier of claim 1, wherein an output port comprises a first output terminal and a second output terminal, the second output terminal is grounded; the filtering unit comprises an electrolytic capacitor, a positive terminal of the electrolytic capacitor is connected to the first output terminal of the output port, and a negative terminal of the electrolytic capacitor is connected to the second output terminal of the output port.

3. The voltage rectifier of claim 2, wherein the rectifying unit comprises a full-bridge rectifier, the full-bridge rectifier comprises a first terminal, a second terminal, a third terminal, and a fourth terminal; the first terminal and the second terminal of the full-bridge rectifier are connected to the lightning protection unit, the second fuse is connected between the third terminal of the full-bridge rectifier and the positive terminal of the electrolytic capacitor, the fourth terminal of the full-bridge rectifier is grounded; or the third terminal of the full-bridge rectifier is connected to the positive terminal of the electrolytic capacitor, the second fuse is connected between the fourth terminal of the full-bridge rectifier and ground.

4. The voltage rectifier of claim 3, wherein the input port comprises a first input terminal and a second input terminal, the lightning protection unit comprises a voltage dependent resistor, a first terminal of the voltage dependent resistor is connected to the first terminal of the full-bridge rectifier, a second terminal of the voltage dependent resistor is connected to the second terminal of the full-bridge rectifier and the second input terminal of the input port, the first fuse is connected between the first terminal of the full-bridge rectifier and the first input terminal of the input port.

5. The voltage rectifier of claim 3, wherein the input port comprises a first input terminal and a second input terminal, the lightning protection unit comprises a transient voltage suppression (TVS) diode, a cathode of the TVS diode is connected to the first terminal of the full-bridge rectifier, an anode of the TVS diode is connected to the second terminal of the full-bridge rectifier and the second input terminal of the input port, the first fuse is connected between the first terminal of the full-bridge rectifier and the first input terminal of the input port.

6. The voltage rectifier of claim 1 or 2 or 3 or 4 or 5, further comprising a first electro magnetic interference (EMI) shielding unit connected between the lightning protection unit and the rectifying unit, wherein the second fuse is connected between the lightning protection unit and the first EMI shielding unit or between the first EMI shielding unit and the rectifying unit.

7. The voltage rectifier of claim 6, further comprising a second EMI shielding unit connected between the first EMI shielding unit and the rectifying unit, wherein the second fuse is connected between the first EMI shielding unit and the second EMI shielding unit or between the second EMI shielding unit and the rectifying unit.

8. The voltage rectifier of claim 7, wherein the first EMI shielding unit comprises a capacitor, a first terminal and a second terminal of the capacitor are connected to the lightning protection unit, the second EMI shielding unit comprises a common-mode inductor having a first winding and a second winding on the common core, the second fuse is connected between the first terminal of the capacitor and a first terminal of the first winding, a second terminal of the first winding is connected to the rectifying unit; a first terminal of the second winding is connected to the second terminal of the capacitor, a second terminal of the second winding is connected to the rectifying unit.

9. The voltage rectifier of claim 7 or 8, wherein the first EMI shielding unit comprises a capacitor, a first terminal and a second terminal of the capacitor are connected to the lightning protection unit, the second EMI shielding unit comprises a common-mode inductor having a first winding and a second winding on the common core;
a first terminal of the first winding is connected to the first terminal of the capacitor, the second fuse is connected between a second terminal of the first winding and the rectifying unit;
a first terminal of the second winding is connected to the second terminal of the capacitor, a second terminal of the second winding is connected to the rectifying unit.
